# EUROPÄISCHE PATENTSCHRIFT

(11) **EP 3 103 668 B1**
(45) Veröffentlichungstag und Bekanntmachung des Hinweises auf die Patenterteilung: **25.08.2021**
(21) Anmeldenummer: 15192310.9
(22) Anmeldetag: 30.10.2015
(51) Int. Cl.: B60K 17/28, F16F 15/10, B60K 25/02

(54) **KRAFTFAHRZEUG MIT EINER LEISTUNGSSTARKEN ARBEITSVORRICHTUNG**
MOTOR VEHICLE WITH A HIGH-PERFORMANCE WORKING DEVICE
VEHICULE AUTOMOBILE DOTE D'UN DISPOSITIF DE TRAVAIL PUISSANT

(30) Priorität: 10.06.2015 AT 5011215 U
(43) Veröffentlichungstag der Anmeldung: 14.12.2016
(73) Patentinhaber: Eschlböck Maschinenbau GmbH, 4731 Prambachkirchen (AT)
(72) Erfinder: Eschlböck, Rudolf, 4731 Prambachkirchen (AT)
(74) Vertreter: Hübscher & Partner Patentanwälte GmbH

(56) Entgegenhaltungen:
- EP-A1- 2 581 271
- DE-A1- 19 748 423
- DE-A1-102008 052 288
- DE-A1-102012 218 912
- FR-A1- 2 983 788
- US-A1- 2005 126 319

## Beschreibung

Die Erfindung bezieht sich auf ein Kraftfahrzeug mit einer leistungsstarken Arbeitsvorrichtung, mit einem im Antriebsstrang des Kraftfahrzeuges zwischen Kraftfahrzeugmotor und Fahrgetriebe angeordneten Nebenabtrieb zum Antreiben der über eine Kupplung wahlweise zu- und wegschaltbaren Arbeitsvorrichtung, wobei der Nebenabtrieb zwischen Kraftfahrzeugmotor und Fahrgetriebe als festes Getriebe ausgebildet ist, wobei das Antriebsrad des festen Getriebes starr in den Antriebsstrang eingebunden, nämlich direkt an den Motor gekoppelt ist und wobei das Abtriebsrad des festen Getriebes über die Kupplung mit einer Abtriebswelle verbunden ist.

Nebenabtriebsgetriebe stellen bei Kraftfahrzeugen eine insbesondere zuschaltbare mechanische Antriebsquelle an einem Nebenausgang des Getriebes bereit. Die mechanische Antriebsenergie kann die Arbeitsvorrichtung antreiben. Des öfteren sind motorverbundene Nebenabtriebe in das Schaltgetriebe von Lastkraftfahrzeugen integriert. Dabei ist die maximale Kraftübertragung derzeit allerdings auf 2.500Nm beschränkt, obwohl Lastkraftwagen mit Motordrehmomenten von bis zu 3.500Nm angeboten werden. Für hohen Stoßbelastungen unterliegende Arbeitsvorrichtungen, wie beispielsweise große Holzzerkleinerungsmaschinen, sind derartige integrierte Nebenabtriebe nicht geeignet. Ist zudem die Kupplung des Nebenabtriebes zu reparieren, muss das gesamte Schaltgetriebe demontiert und zerlegt werden. Dies ist sehr zeitaufwendig und damit teuer. Wenn die Abtriebsdrehrichtung des Nebenabtriebes zudem umgekehrt werden muss, ist es erforderlich ein zusätzliches Getriebe zu verbauen, was den Wirkungsgrad des Antriebsstranges verschlechtert.

Ein Kraftfahrzeug der eingangs geschilderten Art ist aus der FR 2983788 A1 bekannt, die einen hydraulischen Antrieb für eine Arbeitsvorrichtung und einen Fahrantrieb einer Arbeitsmaschine offenbart, wobei die Arbeitsvorrichtung und der Fahrantrieb im Fahrbetrieb von einem gemeinsamen hydraulischen Antrieb mit hydraulischer Energie versorgt werden können. Bei Stillstand des Fahrzeuges kann die hydraulische Versorgung des Nebenantriebes von einem Nebenantrieb her erfolgen.

Aus der DE 10 2008 052 288 A1 und der DE 197 48 423 A1 sind Antriebsstränge der eingangs geschilderten Art bekannt. Bei diesen Antriebssträngen ist zwischen Motor und dem Antriebsrad des Nebenabtriebes eine Schaltkupplung vorgesehen. Einzelne oder alle Nebenaggregate können durch ein Vorsehen wenigstens einer Kupplung gleichzeitig oder wahlweise weggeschaltet werden. Der Erfindung liegt somit die Aufgabe zugrunde, eine Vorrichtung der eingangs geschilderten Art anzugeben, die bei gutem Wirkungsgrad eine Übertragung hoher Drehmomente erlaubt und dabei besonders wartungsfreundlich ist. Besonders bevorzugt sollen ein gleichzeitiger Fahrantrieb und Arbeitsvorrichtungsbetrieb möglich sein.

Die Erfindung, das Kraftfahrzeug nach Anspruch 1, löst die gestellte Aufgabe dadurch, dass die Arbeitsvorrichtung, nämlich eine Zerkleinerungseinrichtung für Holz, an die Abtriebswelle angeschlossen ist und dass das Getriebe des Nebenabtriebes ein einstufiges Getriebe ist.

Der erfindungsgemäße Nebenabtrieb ist ein Zwischengetriebe das zwischen dem Motor und dem Schaltgetriebe, insbesondere eines Lastkraftwagens, montiert ist, womit es besonders wartungsfreundlich ist, da es zwischen Motor und Getriebe verhältnismäßig leicht zugänglich ist. Zudem ist die dem Abtriebsrad und der Abtriebswelle zugeordnete Kupplung auf Grund des seitlichen Versatzes gegenüber des Hauptantriebsstranges leicht für Wartungsarbeiten zugänglich. Diese Anordnung hat auch den Vorteil, dass die Baulänge der Motor-Getriebeeinheit nur gering vergrößert wird. Der gute Wirkungsgrad wird dadurch begünstigt, da das Antriebsrad des Nebenabtriebes starr in den Antriebsstrang eingebunden, nämlich direkt an den Motor gekoppelt ist.

Dazu ist es von Vorteil, wenn der Nebenabtrieb in einem gesonderten Gehäuse zwischen Kraftfahrzeugmotor und Fahrgetriebe als festes Getriebe, mit starrer Übersetzung ausgebildet ist. Das Getriebe des Nebenabtriebes ist ein einstufiges Getriebe. Mit nur zwei für Stoßbelastung dimensionierten Zahnrädern kann die volle LKW-Motorleistung mit besonders geringen Übertragungsverlusten übertragen werden. Die zwei Zahnräder laufen immer mit, auch wenn der Nebenabtrieb ausgekuppelt ist, mit dem Vorteil, dass sich die Kupplung nicht im Antriebsstrang des LKW befindet, und damit einfach gewartet und ausgetauscht werden kann. Auf Grund der großzügigen Platzverhältnisse außerhalb des Antriebsstrangs kann die Kupplung für den Stoßbelastungsbetrieb groß dimensioniert werden.

Zum Anschluss weiterer Nebenantriebe können dem Antriebsrad zwei oder mehr Abtriebsräder zugeordnet sein, die insbesondere mit dem Antriebsrad kämmen. Damit besteht eine weitere Antriebsmöglichkeit.

Die Kupplung des Nebenabtriebs ist vorzugsweise eine Lamellenkupplung, um besonders robuste Konstruktionsverhältnisse sicherzustellen.

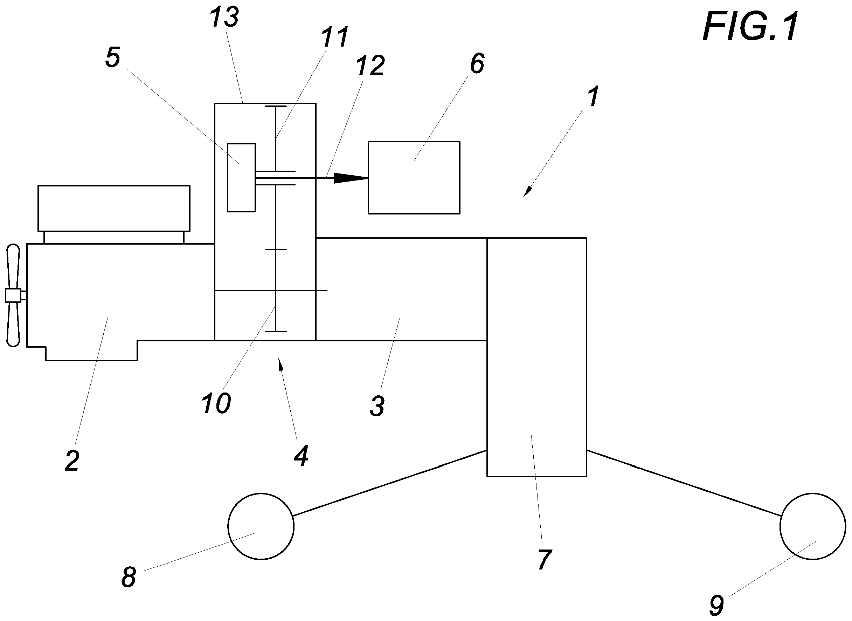

In der Zeichnung ist der Erfindungsgegenstand beispielsweise schematisch dargestellt. Es zeigen
Fig. 1 ein Schaubild eines erfindungsgemäßen Antriebsstranges in Seitenansicht,

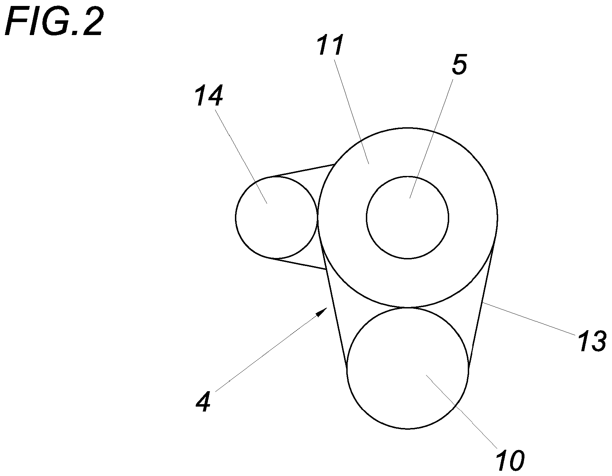

Fig. 2 eine Ansicht auf den Nebenabtrieb und

Es wird ein Antriebsstrang 1 eines Kraftfahrzeuges mit einer leistungsstarken Arbeitsvorrichtung, nämlich einer Zerkleinerungseinrichtung für Holz, gezeigt. Der Antriebsstrang 1 des Kraftfahrzeuges umfasst einen zwischen einem Kraftfahrzeugmotor 2 und einem Fahrgetriebe 3, einem automatischen oder manuellen Schaltgetriebe, angeordneten Nebenabtrieb 4 zum Antreiben der über eine Kupplung 5 wahlweise zu- und wegschaltbaren Arbeitsvorrichtung 6. Dem Fahrgetriebe 3 ist ein Allradgetriebe 7 nachgeordnet, von dem aus die Vorderachse 8 und die Hinterachse 9 angetrieben werden.

Der Nebenabtrieb 4 ist zwischen Kraftfahrzeugmotor 2 und Fahrgetriebe 3 als festes Getriebe, also mit starrer Übersetzung ausgebildet. Das Antriebsrad 10 des Nebenabtriebs 4 ist starr in den Antriebsstrang 1 eingebunden. Das Abtriebsrad 11 des Nebenabtriebs 4 ist über die Kupplung 5 mit einer Abtriebswelle 12 verbunden, an welche die Arbeitsvorrichtung 6 angeschlossen ist. Der Nebenabtrieb 4 ist in einem gesonderten Gehäuse 13 zwischen Kraftfahrzeugmotor 2 und Fahrgetriebe 3 als festes, einstufiges Getriebe ausgebildet, wobei dem Antriebsrad 10 zwei Abtriebsräder 11, 14 zugeordnet sind.

## Patentansprüche

1. Kraftfahrzeug mit einer leistungsstarken Arbeitsvorrichtung, mit einem im Antriebsstrang (1) des Kraftfahrzeuges zwischen Kraftfahrzeugmotor (2) und Fahrgetriebe (3) angeordneten Nebenabtrieb (4) zum Antreiben der über eine Kupplung (5) wahlweise zu- und wegschaltbaren Arbeitsvorrichtung (6), wobei der Nebenabtrieb (6) zwischen Kraftfahrzeugmotor (2) und Fahrgetriebe (3) als festes Getriebe ausgebildet ist, wobei das Antriebsrad (10) des festen Getriebes starr in den Antriebsstrang (1) eingebunden, nämlich direkt an den Motor gekoppelt ist und wobei das Abtriebsrad (11) des festen Getriebes über die Kupplung (5) mit einer Abtriebswelle (12) verbunden ist, **dadurch gekennzeichnet, dass** die Arbeitsvorrichtung (6), nämlich eine Zerkleinerungseinrichtung für Holz, an die Abtriebswelle (12) angeschlossen ist und dass das Getriebe des Nebenabtriebes (4) ein einstufiges Getriebe ist.

2. Kraftfahrzeug nach Anspruch 1, **dadurch gekennzeichnet, dass** der Nebenabtrieb (4) in einem gesonderten Gehäuse (13) zwischen Kraftfahrzeugmotor (2) und Fahrgetriebe (3) als festes Getriebe ausgebildet ist.

3. Kraftfahrzeug nach Anspruch 1 oder 2, **dadurch gekennzeichnet, dass** dem Antriebsrad (10) zwei Abtriebsräder (11, 14) zugeordnet sind.

4. Kraftfahrzeug nach einem der Ansprüche 1 bis 3, **dadurch gekennzeichnet, dass** die Kupplung (5) des Nebenabtriebs (4) eine Lamellenkupplung ist.

## Claims

1. Motor vehicle with a high-performance working device, with a power take-off (4), disposed in the drive train (1) of the motor vehicle between the motor vehicle engine (2) and gear box (3), in order to drive the working device (6) which can be selectively connected and disconnected via a clutch (5), wherein the power take-off (6) is formed as a fixed transmission between the motor vehicle engine (2) and the gear box (3), wherein the drive wheel (10) of the fixed transmission is rigidly integrated in the drive train (1), specifically it is directly coupled to the engine, and wherein the output wheel (11) of the fixed transmission is connected to an output shaft (12) via the clutch (5), **characterised in that** the working device (6), specifically a comminuting device for wood, is attached to the output shaft (12), and that the transmission of the power take-off (4) is a single-stage transmission.

2. Motor vehicle as claimed in claim 1, **characterised in that** the power take-off (4) is formed as a fixed transmission in a separate housing (13) between the motor vehicle engine (2) and gear box (3).

3. Motor vehicle as clamed in claim 1 or 2, **characterised in that** the drive wheel (10) is allocated two output wheels (11, 14).

4. Motor vehicle as claimed in any one of claims 1 to 3, **characterised in that** the clutch (5) of the power take-off (4) is a multi-disc clutch.

## Revendications

1. Véhicule automobile avec un dispositif de travail de forte puissance, avec une prise de force (4) disposée dans la chaîne cinématique (1) du véhicule automobile, entre le moteur du véhicule (2) et la boîte de vitesses (3), pour entraîner le dispositif de travail (6) pouvant être activé et désactivé au choix au moyen d'un accouplement (5), dans lequel la prise de force (6) entre le moteur du véhicule (2) et la boîte de vitesses (3) est configurée comme une transmission fixe, dans lequel la roue menante (10) de la transmission fixe est intégrée de manière rigide dans la chaîne cinématique (1), notamment est accouplée directement au moteur, et dans lequel la roue menée (11) de la transmission fixe est reliée par l'accouplement (5) à un arbre de sortie (12), **caractérisé en ce que** le dispositif de travail (6), à savoir un appareil de déchiquetage pour le bois, est raccordé à l'arbre de sortie (12) et que la transmission de la prise de force (4) est une transmission mono-étagée.

2. Véhicule automobile selon la revendication 1, **caractérisé en ce que** la prise de force (4) placée dans un boîtier séparé (13) entre le moteur du véhicule (2) et la boîte de vitesses (3) est configurée comme une transmission fixe.

3. Véhicule automobile selon la revendication 1 ou 2, **caractérisé en ce que** deux roues menées (11, 14) sont associées à la roue menante (10).

4. Véhicule automobile selon une des revendications 1 à 3, **caractérisé en ce que** l'accouplement (5) de la prise de force (4) est un accouplement à lamelles.
